**Europäisches Patentamt**

**European Patent Office**

**Office européen des brevets**

(19)

(11) Veröffentlichungsnummer: **0 132 229**
**B1**

(12) **EUROPÄISCHE PATENTSCHRIFT**

(45) Veröffentlichungstag der Patentschrift:
**07.10.87**

(51) Int. Cl.⁴: **B 65 G 15/12**

(21) Anmeldenummer: **84810342.0**

(22) Anmeldetag: **11.07.84**

(54) **Vorrichtung zum positionstreuen Transport von Dosenrümpfen in einem Ofen.**

(30) Priorität: **18.07.83 CH 3914/83**

(43) Veröffentlichungstag der Anmeldung:
**23.01.85 Patentblatt 85/4**

(45) Bekanntmachung des Hinweises auf die Patenterteilung:
**07.10.87 Patentblatt 87/41**

(84) Benannte Vertragsstaaten:
**CH DE FR GB IT LI**

(56) Entgegenhaltungen:
**CH - A - 627 261**
**FR - A - 1 046 037**
**GB - A - 2 010 204**
**US - A - 3 713 421**
**US - A - 4 327 665**

(73) Patentinhaber: **Frei, Siegfried, Schoeckstrasse 3,
CH-9000 St. Gallen (CH)**

(72) Erfinder: **Frei, Siegfried, Schoeckstrasse 3, CH-9000 St.
Gallen (CH)**

(74) Vertreter: **Gachnang, Hans Rudolf, Algisserstrasse 33,
CH-8500 Frauenfeld (CH)**

## Beschreibung

Die vorliegende Erfindung betrifft eine Vorrichtung zum positionstreuen Transport von Dosenrümpfen in einem Ofen gemäss Oberbegriff des Patentanspruches 1.

Bei längsnahtgeschweissten Dosenrümpfen ist für viele Füllgüter eine Abdeckung der Schweissnaht mit einem Nass- oder Pulverlack notwendig. Die Trocknung bzw. das Aufschmelzen und Aushärten des Lackes erfolgt im Anschluss an den Lackiervorgang. Die in ununterbrochener Folge mit einer Geschwindigkeit von 15 bis 60 und mehr Metern pro Minute sich folgenden Dosenrümpfe müssen während der Trocknung im Ofen stets derart gehalten werden, dass die Naht bzw. der auf dieser aufgetragene Lackstreifen immer exakt an der gleichen Stelle, vorzugsweise im Scheitel liegend an der Wärmequelle entlang geführt werden kann.

Es sind bereits Vorrichtungen bekannt, wobei zwei unterschiedliche Transportmittel verwendet werden.

Am meisten verbreitet sind Vorrichtungen, bei welchen die von der Längsnaht-Schweissmaschine kommenden und frisch nahtlackierten Dosenrümpfe auf einer oder zwei um Umlenkräder geführten Ketten liegend durch den Ofen an Heizelementen entlanggeführt werden.

Mit Ketten kann kein absolut vibrationsfreier Transport der Dosenrümpfe erreicht werden. Dieser Nachteil ergibt sich aus der Oberflächenstruktur dieser Maschinenelemente, welche an jeder der vielen notwendigen Abstützungen längs der Trume diese Vibrationen auslösen. Des weiteren benötigen Ketten eine dauernde Schmierung, welche im Bereich des Ofens nur schwer möglich ist, ohne Spuren auf den Dosen zu hinterlassen.

Es ist auch schon vorgeschlagen worden, anstelle der Ketten endlos verschweisste Stahlbänder zu verwenden. In der CH-PS 627 261 werden solche Stahlbänder paarweise und schräggestellt über entsprechende Führungsrollen durch den Ofen geführt. Die Bänder sind zudem vertikal übereinanderliegend angeordnet und die auf den Bändern aufliegenden Dosenrümpfe müssen mit starken, ebenfalls längs der gesamten Transportstrecke hinter den Bändern angebrachten Magneten gehalten werden.

Neben den hohen Kosten für die hochwertigen Magnete ergeben sich Probleme mit der Schmierung der Kugellager in den Führungsrollen auf denen die Bänder durch den heissen Ofen geführt werden.

Die Aufgabe der vorliegenden Erfindung besteht nun darin, die Nachteile der bekannten Vorrichtung zu beheben und eine Vorrichtung zu schaffen, die einen absolut erschütterungsfreien und spurtreuen Lauf der Bänder und damit ruhigen Transport der Dosenrümpfe auf der gesamten Transportstrecke ermöglicht.

Nach der Erfindung wird diese Aufgabe gemäss den kennzeichnenden Merkmalen des Patentanspruches 1 gelöst. Weitere vorteilhafte Ausführungsformen sind in den abhängigen Ansprüchen wiedergegeben.

Die Verwendung von Stahlbändern mit feststehenden Führungselementen, welche die Bänder sowohl unten und oben als auch seitlich führen, beseitigt sämtliche Nachteile der bekannten Transporte. Der völlig vibrationsfreie Lauf hat den Vorteil, dass die leichten Dosenrümpfe ohne Haltemittel (Klinken, Nocken oder Magnete) während des gesamten Transportes positionstreu liegenbleiben, wodurch die Heizzone im Ofen nur gerade den schmalen Nahtbereich mit dem dort aufgetragenen Lack oder Pulver überstreichen muss. Durch diesen Vorteil kann einerseits Energie gespart und andererseits der negative Einfluss einer breiten Heizzone auf die ausserhalb der Naht liegende Bedruckung vermieden werden.

Eine Schmierung sowohl der Führungen als auch der Transportmittel (Stahlband) entfällt vollständig, wodurch die Kosten für die Wartung vernachlässigbar klein werden. Ein allfällig notwendig werdender Austausch der Stahlbänder nach Jahren ist ein Mehrfaches billiger als die Kosten für den Ersatz von Ketten. Die gehärteten Stahl- oder Keramikstifte als Laufflächen in den Bandführungen weisen einen sehr geringen Gleitwiderstand auf und sind wegen der geringen Reibkräfte völlig verschleissfrei.

Der über dem Band angeordnete Führungsstift verhindert nebst dem Kippen des Bandes infolge der Masse der Dosenkörper zudem eine allfällige Verwindung des Bandes beim Eintritt in den heissen Ofen sowie eine Schwingung des Bandes infolge Resonanz mit anderen Schwingungen im Raum.

Die einfachen, sowohl vertikal als auch horizontal verschieb- und einstellbaren Führungsblöcke ermöglichen ein rasches und genaues Anpassen der Transportbänder an verschieden grosse Dosenrümpfe.

Anhand illustrierter Ausführungsbeispiele wird die Erfindung näher erläutert. Es zeigen:

Figur 1 eine Ansicht eines Dosentransportes durch einen Trocknungsofen,

Figur 2 einen Querschnitt durch die Anlage längs Linie II–II in Figur 1,

Figur 3 einen Querschnitt durch den Transport längs Linie III–III in Figur 4 und

Figur 4 einen Grundriss des Transportes.

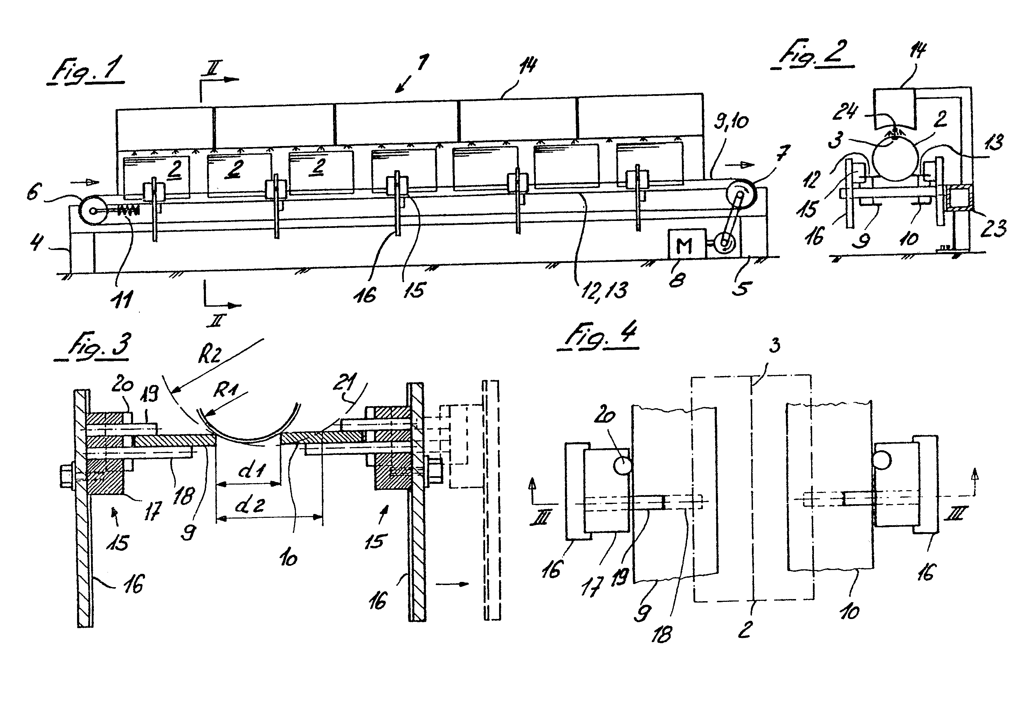

In Figur 1 ist eine Trocknungsanlage 1 für Dosenkörper 2 mit einem Schutzlack auf der Schweissnaht 3 mit den für die Erfindung wesentlichen Teilen dargestellt. An den beiden Enden der Anlage 1 sind auf entsprechenden Sockeln 4 und 5 je paarweise nebeneinanderliegende Umlenkrollen 6 und 7 drehbar gelagert, wobei mindestens ein Rollenpaar 6 oder 7 mit einem Antrieb 8 verbunden ist. Über die beiden Rollenpaare 6 und 7 laufen je zu endlosen Bändern 9 und 10 zusammengeschweisste Stahlbänder um. Ein Spannelement 11, z.B. eine Feder oder ein Pneumatikzylinder, hält die Bänder 9 und 10 gespannt. Über den beiden parallel verlaufenden, in einer Ebene liegenden, oberen Trumen 12 und 13 der Bänder 9 und 10 ist ein Ofen 14 mit einer Vielzahl von längs der Trume 12, 13 liegenden Wärmequellen 24, z.B. Heizstäben, Gasbrennern, Heissluftdüsen etc. angeordnet. Der Ofen 14 kann einteilig hergestellt sein oder aus einer Anzahl von Sektionen bestehen.

Längs der Trume 12 und 13, die je nach Zusammensetzung des Nahtschutzlackes und/oder der Fördergeschwindigkeit eine Länge von neun und mehr Metern erreichen können, sind in Abständen Führungsblöcke 15 an Trägern 16 befestigt. Die Träger 16 sind an über die gesamte Länge der Anlage 1 verlaufenden Profilrohren oder -trägern 23 bzw. Auslegern an denselben befestigt und quer zur Laufrichtung der Bänder 9 und 10 verschiebbar. In Figur 1 sind die Träger 16 der Übersichtlichkeit halber schmaler als die Führungsblöcke 15 dargestellt.

In den Figuren 3 und 4 sind Führungsblöcke 15 in vergrössertem Massstab sowie die von diesen geführten Bänder 9 und 10 dargestellt. Im wesentlichen besteht ein Führungsblock 15 aus einem Grundkörper 17 aus Stahl, Guss oder Aluminium und zwei in horizontale, übereinanderliegende Bohrungen eingesteckten Stahl- oder Keramikstiften 18 und 19, wobei der obere Stift 19 etwas kürzer als der untere ausgebildet ist, sowie einen vertikalliegenden Stift 20. Der Abstand zwischen den beiden Stiften 18, 19 ist so bemessen, dass das Band 9, 10 mit geringem Spiel dazwischen gleiten kann. Vorzugsweise ist der Stift 20 in einer seitlich offenen Bohrung eingesetzt, so dass ein Teil von dessen Mantel die Oberfläche des Grundkörpers 17 überragt. Zusammen bilden diese drei Stifte 18, 19, 20 eine schlitzförmige Führung (Einschnitt) für die oberen Trume 12, 13 der Bänder 9, 10. Anstelle der drei Stifte kann im Grundkörper 17 beispielsweise ein schlitzförmiger Einschnitt vorgesehen sein, dessen Wände eine verschleissfeste Oberfläche aufweisen. Allerdings liegt bei der letztgenannten Ausführung im Gegensatz zu der Stiftführung nicht eine linienförmige Berührung der Bänder 9, 10 mit dem Führungsblock 15 vor, sondern eine flächenförmige. Dieser Umstand führt selbstverständlich zu einer etwas höheren Gleitreibung.

Für das Band 10 liegen die Führungsblöcke 15 denjenigen für das Band 9 gegenüber. Die beiden Trume 12, 13 weisen einen Abstand $d_1$ auf, welcher derart bemessen ist, dass ein Dosenkörper 2 mit einem Radius R1 in dargestellter Weise liegend auf den Kanten der Bänder 9 und 10 transportiert werden kann.

Für grössere Dosenrümpfe 21 mit Radius R2 können die Führungsblöcke 15 zusammen mit den Trägern 16 nach aussen versetzt werden (in gebrochenen Linien in Figur 3 einseitig dargestellt). Der nun wesentlich grössere Abstand $d_2$ erlaubt das Einlegen und Transportieren der grösseren Dosenrümpfe 21. Um den Abstand zu den Wärmequellen 14 einstellen zu können, sind die Führungskörper 15 auch in vertikaler Richtung verstellbar. Vorzugsweise werden jeweils beide Bänder 9 und 10 verschoben, damit die zu trocknende Naht 3 an den Rümpfen 2, 21 immer genau mittig unter den Wärmequellen 14 (Figur 2) zu liegen kommt.

## Patentansprüche

1. Vorrichtung zum positionstreuen Transport von Dosenrümpfen (2) in einem Ofen (14) zur Trocknung einer im Bereich der Schweissnaht (3) auf dieser aufgetragenen Lackschicht und/oder zum Aufschmelzen und Aushärten einer Pulverschicht auf der Schweissnaht, bestehend aus zwei über Spann- und Umlenkrollen (6, 7) umlaufenden, in einem Abstand parallel nebeneinanderliegenden, endlosen Stahlbändern, (9, 10) dadurch gekennzeichnet, dass die Stahlbänder (9, 10) zwischen den Umlenkrollen (6, 7) im Bereich des Ofens (14) in feststehenden, seitlich der Bänder (9, 10) angebrachten Führungsblöcken (15) gleiten und von diesen sowohl seitlich als auch von unten und oben geführt werden.

2. Vorrichtung nach Anspruch 1, dadurch gekennzeichnet, dass in den Blöcken (15) ein schlitzförmiger Einschnitt als Führung für die Bänder (9, 10) angebracht ist.

3. Vorrichtung nach Anspruch 1, dadurch gekennzeichnet, dass die Führung aus paarweise übereinanderliegenden, an den Führungsblöcken (15) befestigten Hartmetall- oder Keramikstiften (18, 19) gebildet wird.

4. Vorrichtung nach den Ansprüchen 2 und 3, dadurch gekennzeichnet, dass für die seitliche Führung der Bänder (9, 10) an den Führungsblöcken (15) ein vertikalliegender Stift (20) aus Hartmetall oder Keramik angebracht ist.

5. Vorrichtung nach Anspruch 4, dadurch gekennzeichnet, dass der vertikal angebrachte Stift (20) in einer Bohrung an den Führungsblöcken (15) eingelassen ist, wobei der Bohrungsquerschnitt bzw. die Oberfläche des darin eingelassenen Stiftes (20) teilweise die Oberfläche des Führungsblockes (15) überragt und eine linienförmige Gleitstelle für die seitliche Kante des Bandes (9 bzw. 10) bildet.

6. Vorrichtung nach Anspruch 1, dadurch gekennzeichnet, dass die Führungsblöcke (15) sowohl vertikal als auch horizontal verschiebbar mit einem Träger (23) verbunden sind.

7. Vorrichtung nach Anspruch 1, dadurch gekennzeichnet, dass die beiden oberen Trume (12, 13) der Bänder (9, 10) in einer gemeinsamen Ebene liegen.

## Revendications

1. Dispositif pour le transport de boîtes de conserve (2) dans une position déterminée à travers un four (14) en vue du séchage d'une couche de vernis déposée dans la région du cordon de soudure (3) et/ou la fusion et le durcissement d'une couche de poudre sur le cordon de soudure, constitué par deux bandes d'acier sans fin (9, 10) tournant autour de rouleaux tendeurs et de renvoi (6, 7), parallèles et séparées d'une cetaine distance, caractérisé en ce que les bandes (9, 10) glissent entre les rouleaux de renvoi (6, 7) dans la région du four (14) dans des blocs de guidage (15) fixes et montés latéralement par rapport aux bandes (9, 10), en étant guidées par ceux-ci aussi bien latéralement que par le dessous et par le dessus.

2. Dispositif selon la revendication 1, caractérisé en ce que l'entaille en forme de fente qui constitue un guidage pour les bandes (9, 10) est constituée dans les blocs (15).

3. Dispositif selon la revendication 1, caractérisé en ce que le guidage est constitué par des tiges en métal dur ou en céramique (18, 19) fixées par paires et l'une au-dessus de l'autre aux blocs de guidage (15).

4. Dispositif selon les revendications 2 et 3, caractérisé en ce qu'une tige (20) en métal dur ou en céramique et disposée verticalement est montée dans les blocs de guidage (15) en vue du guidage latéral des bandes (9, 10).

5. Dispositif selon la revendication 4, caractérisé en ce que la tige (20) disposée verticalement est enfoncée dans un alésage des blocs de guidage (15), la section transversale de l'alésage ou la surface de la tige (20) enfoncée dans celui-ci dépassant en partie la surface du bloc de guidage (15) et formant une position de glissement linéaire pour le bord latéral de la bande (9 ou 10).

6. Dispositif selon la revendication 1, caractérisé en ce que les blocs de guidage (15) sont reliés à un support (23) de manière à pouvoir être déplacés aussi bien verticalement qu'horizontalement.

7. Dispositif selon la revendication 1, caractérisé en ce que les deux brins supérieurs (12, 13) des bandes (9, 10) sont situés dans un plan commun.

**Claims**

1. Device for the precisely positioned transportation of can bodies (2) in an oven (14) for drying a layer of varnish, which has been applied to the weld (3) in the region thereof, and/or for fusing and hardening a layer of powder on the weld, comprising two endless steel belts (9, 10) which travel over tension and guide rollers (6, 7) and lie adjacent and parallel to one another with a spacing therebetween, characterised in that the steel belts (9, 10) between the guide rollers (6, 7) in the region of the oven (14) slide in fixed guide blocks (15) which are provided laterally of the belts (9, 10) and serve to guide the belts both laterally and from below and above.

2. Device according to claim 1, characterised in that a slot-shaped incision is provided in the blocks (15) as guide means for the belts (9, 10).

3. Device according to claim 1, characterised in that the guide means is formed from hard-metal or ceramic pins (18, 19) which lie in pairs one above the other and are secured to the guide blocks (15).

4. Device according to claims 2 and 3, characerised in that a vertically extending pin (20), made of hard-metal or ceramics, is provided for the lateral guidance of the belts (9, 10) on the guide blocks (15).

5. Device according to claim 4, characterised in that the vertically mounted pin (20) is inserted in a bore in the guide blocks (15), whereby the bore cross-section, or respectively the surface of the pin (20) inserted therein, partially protrudes beyond the surface of the guide block (15) and forms a linear sliding point for the lateral edge of the belt (9 or 10 respectively).

6. Device according to claim 1, characterised in that the guide blocks (15) are connected to a support member (23) so as to be displaceable both vertically and horizontally.

7. Device according to claim 1, characterised in that the two upper runs (12, 13) of the belts (9, 10) lie in a common plane.

Fig. 1

Fig. 2

Fig. 3

Fig. 4